# EUROPÄISCHE PATENTSCHRIFT

(11) **EP 2 828 917 B1**
(45) Veröffentlichungstag und Bekanntmachung des Hinweises auf die Patenterteilung: **21.06.2017**
(21) Anmeldenummer: 13705920.0
(22) Anmeldetag: 21.02.2013
(51) Int. Cl.: H01M 8/04

(54) **VERFAHREN ZUM BETREIBEN EINES BRENNSTOFFZELLENSTAPELS FÜR EIN BRENNSTOFFZELLENSYSTEM**
METHOD OF OPERATING A FUEL CELL SYSTEM
PROCÉDÉ D'OPÉRATION D'UN SYSTÈME DE PILE À COMBUSTIBLE

(30) Priorität: 23.03.2012 DE 102012005837
(43) Veröffentlichungstag der Anmeldung: 28.01.2015
(73) Patentinhaber: Daimler AG, 70327 Stuttgart (DE)
(72) Erfinder: BLANK, Felix, 78465 Konstanz (DE); WÖHR, Martin, 73235 Weilheim (DE)
(74) Vertreter: JENSEN & SON
(86) Internationale Anmeldenummer: PCT/EP2013/000499
(87) Internationale Veröffentlichungsnummer: WO 2013/139424

(56) Entgegenhaltungen:
- EP-A1- 0 074 701
- DE-A1-102007 017 172
- DE-A1-102007 034 300
- JP-A- 2001 229 947
- JP-A- 2005 322 596
- JP-A- 2009 245 802

## Beschreibung

Die Erfindung betrifft ein Verfahren zum Betreiben eines Brennstoffzellenstapels für ein Brennstoffzellensystem, bei welchem in einem Kühlbetrieb durch Umkehren der Strömungsrichtung eines Kühlmittels das Kühlmittel im Brennstoffzellenstapel zunächst in eine erste Richtung gefördert wird und anschließend in eine zweite, der ersten Richtung zumindest im Wesentlichen entgegengesetzten Richtung.

Wird ein Brennstoffzellenstapel eines Brennstoffzellensystems bei kalten Umgebungstemperaturen, also bei Temperaturen von weniger als 0 °C, in Betrieb genommen, so tritt üblicherweise an vereinzelten Stellen im Brennstoffzellenstapel eine Wärmeentwicklung auf, welche damit zusammenhängt, dass an diesen Stellen die Umsetzung von Wasserstoff mit Sauerstoff besonders schnell in Gang kommt. Mit zunehmender Erwärmung der Stelle kann von diesem Bereich der Brennstoffzelle auch vermehrt elektrische Energie geliefert werden, und die Stelle erwärmt sich weiter. Da mit zunehmender Temperatur der Brennstoffzelle ihr Wirkungsgrad steigt, kann noch mehr elektrische Energie generiert werden, und die Stelle erwärmt sich noch weiter.

Derartige lokal begrenzte und im Vergleich zur Umgebung im Brennstoffzellenstapel eine hohe Temperatur aufweisende Stellen werden auch als Hotspots bezeichnet. Da eine zu starke Erwärmung des Brennstoffzellenstapels im Bereich der Hotspots zur einer Austrocknung oder Beschädigung der Membran der Brennstoffzelle führen kann, wird auch bei einem Kaltstart oder Gefrierstart des Brennstoffzellenstapels ein Kühlmittelstrom eingestellt, welcher die Wärme von den Hotspots abführt. Es findet also selbst beim Kaltstart oder Gefrierstart des Brennstoffzellenstapels ein Kühlbetrieb statt, welcher dem Abführen der von den Hotspots generierten Wärme dient.

Die DE 10 2007 034 300 A1 beschreibt eine Umkehr der Strömungsrichtung des Kühlmittels im Brennstoffzellenstapel während des Starts des Brennstoffzellenstapels.

Hierbei ist in einem den Brennstoffzellenstapel umfassenden Kühlmittelkreis eine Kühlmittelpumpe angeordnet, welche von einer ersten Förderrichtung in eine zweite, der ersten Richtung entgegengesetzte Förderrichtung umschalten kann. Für die Umkehr der Strömungsrichtung wird eine vergleichsweise kurze Taktzeit von beispielsweise sechs Sekunden gewählt, um Temperaturdifferenzen innerhalb des Brennstoffzellenstapels möglichst gering zu halten. Es kann auch eine noch kürzere Taktzeit eingestellt werden, um die im Brennstoffzellenstapel vorliegende Temperaturspanne weiter zu verkleinern.

Als nachteilig ist hierbei der Umstand anzusehen, dass es trotz des Umkehrens der Strömungsrichtung des Kühlmittels zu Problemen im Kühlbetrieb kommen kann.

Aufgabe der vorliegenden Erfindung ist daher, ein Verfahren der Eingangs genannten Art zu schaffen, mittels welchem sich eine Verbesserung des Startverhaltens des Brennstoffzellenstapels erreichen lässt.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Gemäß einem ersten Aspekt der Erfindung wird während des Kühlbetriebs eine Zeitspanne, nach deren Verstreichen die Strömungsrichtung umgekehrt wird, zumindest einmal verändert. Dadurch lässt sich die Kühlmittelströmung im Brennstoffzellenstapel genau so einstellen, dass ausreichend viel Wärme von Hotspots abgeführt wird, um eine Beschädigung der Membran der jeweiligen Brennstoffzelle zu vermeiden. Andererseits ist die jeweils vorgegebene Zeitspanne nicht so lang, dass nach dem Abtransportieren von Wärme von dem Hotspot in diesem Bereich eine zu starke Abkühlung stattfindet. Diese könnte nämlich ansonsten, da durch die Brennstoffzellenreaktion bereits Wasser produziert wurde, zu Eisbildung und somit zum Verstopfen von Reaktionsstoffkanälen führen. Durch das Verändern der Zeitspannen, in welchen das Kühlmittel während des Kühlbetriebs den Brennstoffzellenstapel in die jeweilige Richtung durchströmt, können diese Zeitspannen auf die gerade vorliegende Situation optimal abgestimmt werden, sodass weder eine unzureichende Abfuhr von Wärme von den Hotspots auftritt, noch eine zu starke Wärmeabfuhr. So wird eine Verbesserung des Startverhaltens des Brennstoffzellenstapels insbesondere bei einem Kaltstart oder Gefrierstart erreicht.

Insbesondere erfolgt das Starten des Brennstoffzellestapels, also das Erreichen eines Betriebszustands, in welchem dieser eine gewünschte elektrische Leistung bereitstellen kann, so besonders rasch und stabil. Dies führt wiederum dazu, dass während des Startvorgangs weniger Energie aus einem gegebenenfalls in dem Brennstoffzellensystem vorhandenen, anderweitigen elektrischen Energiespeicher, etwa einer Batterie, bezogen zu werden braucht. Dies ist insbesondere dann von Vorteil, wenn das Brennstoffzellensystem in einem Fahrzeug angeordnet ist, da so für weitere Fahrzeugfunktionen, etwa für die Klimatisierung des Innenraums, mehr elektrische Energie aus dem Energiespeicher zur Verfügung steht.

Während des Kühlbetriebs, während also von den Hotspots im Bereich des Brennstoffzellenstapels Wärme abgeführt und auf die Hotspots umgebende Bereiche verteilt wird, erfolgt das Umkehren der Strömungsrichtung weitgehend unterbrechungsfrei, sofern Trägheitseffekte der Kühlmittelströmung vernachlässigt werden. Insbesondere fördert eine Pumpeinrichtung während des Kühlbetriebs das Kühlmittel permanent. Es kann jedoch auch eine Zeit lang die Kühlmittelströmung zum Stillstand kommen, bevor die Strömungsrichtung umgekehrt wird.

Gemäß der Erfindung wird die Zeitspanne, nach deren Verstreichen die Strömungsrichtung umgekehrt wird, mit zunehmender Dauer des Kühlbetriebs vergrößert. Dem liegt die Erkenntnis zugrunde, dass zu Beginn des Kühlbetriebs, wenn die Hotspots noch vergleichweise klein sind, die Wärme des Hotspots nur ein Stück weit von diesem abgeführt zu werden braucht, um durch das Nachströmen von kühlerem Kühlmittel eine ausreichende Kühlung des Hotspots sicherzustellen. Zudem ist eine anfangs kurze Zeitspanne dafür förderlich, dass die Wärme sehr weitgehend im Brennstoffzellenstapel verbleibt und somit zum raschen Erreichen einer gewünschten Betriebstemperatur des gesamten Brennstoffzellenstapels beiträgt. Des Weiteren kann durch zunächst kurze Zeitspannen, nach welchen die Strömungsrichtung umgekehrt wird, eine unerwünschte Eisbildung im Bereich von Hotspots, denen durch den Kühlmittelstrom Wärme entzogen wurde, besonders sicher verhindert werden. Durch zunehmendes Vergrößern der Zeitspannen lässt sich jedoch die Wärme besonders gut im Brennstoffzellenstapel verteilen.

Als weiter vorteilhaft hat sich gezeigt, wenn zumindest während einer ersten Zeitspanne ein Kühlmittelvolumen, welches eine höhere Temperatur aufweist als ein weiteres Kühlmittelvolumen, welches sich ebenfalls in einem den Brennstoffzellenstapel umfassenden Kühlmittelkreis befindet, nicht weiter als eine vorbestimmte Wegstrecke von einer sich in dem Brennstoffzellenstapel befindenden Wärmequelle entfernt wird. Dadurch wird verhindert, dass die Wärmequelle oder der Hotspot soweit abkühlt, dass in dem Hotspot gebildetes Reaktionswasser gefrieren kann. Zudem sorgt das Oszillieren des erwärmten Kühlmittelvolumens um die Wärmequelle, also den Hotspot, für eine erwünschte Wärmeverteilung vom Hotspot in beide Richtungen, jedoch lediglich über die vorbestimmte Wegstrecke hinweg.

Gemäß einem weiteren Aspekt der Erfindung wird bei dem Verfahren zum Betreiben eines Brennstoffzellenstapels für ein Brennstoffzellensystem während des Kühlbetriebs eine Wegstrecke, über welche hinweg ein Kühlmittelvolumen von einer sich in dem Brennstoffzellenstapel befindenden Wärmequelle entfernt wird, zumindest einmal verändert. Mit anderen Worten wird im laufenden Kühlbetrieb die Amplitude der Kühlmittel-Oszillation variiert. Auch auf diese Weise lässt sich eine Verbesserung des Startverhaltens des Brennstoffzellenstapels erreichen.

Die Wegstrecke kann insbesondere dadurch während des laufenden Kühlbetriebs verändert werden, dass der Druck und/oder die Förderleistung einer das Kühlmittel fördernden Pumpeinrichtung verändert wird. So können auch bei festen Taktzeiten des Umkehrens der Strömungsrichtung durch Verändern des Drucks und/oder der Förderleistung der Pumpeinrichtung unterschiedliche Strömungsgeschwindigkeiten eingestellt werden. Durch das Einstellen unterschiedlicher Strömungsgeschwindigkeiten legt das Kühlmittelvolumen im Brennstoffzellenstapel unterschiedlich weite Wegstrecken zurück.

Das Verändern der Zeitspanne, nach deren Verstreichen die Strömungsrichtung umgekehrt wird, und/oder das Verändern der Wegstrecke kann insbesondere in Abhängigkeit von einer Temperatur im Brennstoffzellenstapel und/oder in Abhängigkeit von der Außentemperatur vorgenommen werden. So kann besonders gut die Veränderung des Kühlmittelstroms im Brennstoffzellenstapel an die jeweiligen Verhältnisse angepasst werden.

Als weiter vorteilhaft hat sich gezeigt, wenn während einer ersten Phase des Kühlbetriebs ein Kühlmittelvolumen, welches eine höhere Temperatur aufweist als ein weiteres, sich in dem den Brennstoffzellenstapel umfassenden Kühlmittelkreis befindendes Kühlmittelvolumen, zwischen einem ersten Kühlmittelanschluss des Brennstoffzellenstapels und einem zweiten Kühlmittelanschluss des Brennstoffzellenstapels hin und her bewegt wird. So wird dafür gesorgt, dass das erwärmte Kühlmittelvolumen den Brennstoffzellenstapel nicht verlässt, und es wird besonders gut die von den Wärmequellen oder Hotspots abgeführte Wärme zum Anheben der Temperatur des gesamten Brennstoffzellenstapels genutzt. Auch wird so besonders gut die Wärme der sich immer weiter ausbreitenden Hotspots auf einen immer größeren Teilbereich des Brennstoffzellenstapels verteilt.

Von Vorteil ist es weiterhin, wenn während einer zweiten Phase des Kühlbetriebs das Kühlmittelvolumen zumindest bis zu dem ersten Kühlmittelanschluss und/oder bis zu dem zweiten Kühlmittelanschluss des Brennstoffzellenstapels gefördert wird. Im Bereich der Kühlmittelanschlüsse vermischen sich nämlich die Kühlmittelströme aus unterschiedlichen Kühlmittelkanälen, welche zum Kühlen der jeweiligen Brennstoffzellen des Brennstoffzellenstapels vorgesehen sind. Durch dieses Vermischen von Kühlmittel, welches aus voneinander verschiedenen Kühlmittelkanälen des Brennstoffzellenstapels stammt, erfolgt eine gute Homogenisierung der Wärme des Kühlmittels. Insbesondere erfolgt so eine Wärmeverteilung auch in von der Strömungsrichtung des Kühlmittels abweichenden Richtungen, etwa senkrecht zu der Strömungsrichtung des Kühlmittels durch den Brennstoffzellenstapel. Diese konvektive Wärmeverteilung, welche zusätzlich zu der ohnehin auftretenden Verteilung durch Wärmeleitung stattfindet, führt zu einer besonders schnellen Aufwärmung des gesamten Brennstoffzellenstapels.

In einer weiteren vorteilhaften Ausgestaltung der Erfindung wird während des Kühlbetriebs das Kühlmittel zumindest zeitweise ausschließlich durch einen ersten, den Brennstoffzellenstapel umfassenden Kühlmittelkreis gefördert, welcher mit einem zweiten, einen Kühler aufweisenden Kühlmittelkreis fluidisch koppelbar ist. Dieser erste, kleine Kühlmittelkreis enthält eine geringere Menge an Kühlmittel als der gesamte Kühlmittelkreis, welcher durch fluidisches Koppeln des ersten Kühlmittelkreises und des zweiten Kühlmittelkreises realisiert werden kann. Da das Kühlmittel zunächst ausschließlich in dem ersten, kleinen Kühlmittelkreis gefördert wird, ist ein besonders rasches Aufwärmen des Kühlmittels erreichbar.

In einer weiteren Ausgestaltung der Erfindung kann in Abhängigkeit von einer Temperatur eines sich in dem Brennstoffzellenstapel befindenden Kühlmittelvolumens zumindest ein Teil dieses Kühlmittelvolumens durch Kühlmittel aus einem den Brennstoffzellenstapel umfassenden Kühlmittelkreis ersetzt werden, welches eine geringere Temperatur aufweist. Mit anderen Worten wird also zunächst ein sich in dem Brennstoffzellenstapel befindendes Kühlmittelvolumen erwärmt und anschließend kühleres Kühlmittel aus dem sich außerhalb des Brennstoffzellenstapels befindenden Bereichen des Kühlmittelkreises in den Brennstoffzellenstapel eingebracht. Insbesondere wenn hierbei lediglich ein partieller Ersatz des wärmeren Kühlmittelvolumens durch kühleres Kühlmittel erfolgt, lässt sich besonders rasch eine hohe Leistungsfähigkeit des Brennstoffzellenstapels erzielen. Schließlich wird auf diese Weise, also durch chargenweises Erwärmen des sich in dem Brennstoffzellenstapel befindenden Kühlmittelvolumens das gesamte sich in dem Kühlmittelkreis befindende Kühlmittel erwärmt.

Schließlich hat sich als vorteilhaft gezeigt, wenn ein Ausströmen von Kühlmittel aus dem Brennstoffzellenstapel und/oder ein Einströmen von Kühlmittel in den Brennstoffzellenstapel in Abhängigkeit von einer Temperatur des sich in dem Brennstoffzellenstapel befindenden Kühlmittels zumindest zeitweise mittels wenigstens eines Strömungsleitelements erschwert wird. Bei dem wenigstens einen Strömungsleitelement kann es sich z.B. um eine Klappe handeln.
So wird durch das Strömungsleitelement dafür gesorgt, dass ein vergleichsweise großer Anteil des Kühlmittels im Brennstoffzellenstapel verbleibt. Dadurch wird die im Kühlbetrieb von den Hotspots abgeführte Wärme besonders weitgehend zur Aufwärmung des gesamten Brennstoffzellenstapels genutzt.

Bevorzugt ist dass wenigstens ein Strömungsleitelement in eine Verstaustellung verbringbar, in welcher es das Ausströmen von Kühlmittel und/oder das Einströmen von Kühlmittel nicht mehr behindert. Entsprechend erfüllt das Strömungsleitelement seine das Kühlmittel im Brennstoffzellenstapel zurückhaltende Funktion nur so lange, wie dies zur gleichmäßigen Aufwärmung des Brennstoffzellenstapels gewünscht ist.

Wenn der den Brennstoffzellenstapel aufweisende Kühlmittelkreis eine gewünschte Temperatur erreicht hat, kann vom alternierenden, also die Strömungsrichtung umkehrenden, in einen weiteren, normalen Betriebsmodus gewechselt werden, in welchem das Kühlmittel lediglich in eine Strömungsrichtung durch den Brennstoffzellenstapel strömt.

Das erfindungsgemäße Brennstoffzellensystem, welches insbesondere für ein Fahrzeug vorgesehen sein kann, umfasst einen Kühlmittelkreis, in welchem ein Brennstoffzellenstapel angeordnet ist. Zudem sind Mittel zum Umkehren der Strömungsrichtung eines Kühlmittels vorgesehen, welches sich im Brennstoffzellenstapel befindet. Die Mittel zum Umkehren der Strömungsrichtung können auch außerhalb des Brennstoffzellenstapels angeordnet sein. Dabei kann es sich z.B. um eine Pumpe handeln, die für eine Förderung des Kühlmittels in beide Richtungen (also vorwärts und rückwärts) ausgelegt ist. Eine Steuerungseinrichtung, welche dem Ansteuern der Mittel dient, ist dazu ausgelegt, während des Kühlbetriebs eine Zeitspanne zu verändern, nach deren Verstreichen die Strömungsrichtung umgekehrt wird. Zusätzlich oder alternativ kann die Steuerungseinrichtung dazu ausgelegt sein, eine Wegstrecke zu verändern, über welche hinweg ein Kühlmittelvolumen von einer sich in dem Brennstoffzellenstapel befindenden Wärmequelle entfernt wird. Dies kann insbesondere dadurch bewerkstelligt werden, dass die Steuerungseinrichtung eine Pumpeinrichtung ansteuert. Mittels eines solchen Brennstoffzellensystems lässt sich eine Verbesserung des Startverhaltens des Brennstoffzellenstapels erreichen, da die im Kühlbetrieb von Hotspots abgeführte Wärme besonders gut im Bereich des Brennstoffzellenstapels gehalten werden kann. Dies führt zum Aufwärmen desselben, so dass der Brennstoffzellenstapel rasch die gewünschte Leistung bereitstellen kann.

Bei einer möglichen technischen Lösung umfassen die Mittel zum Umkehren der Strömungseinrichtung bevorzugt eine Ventileinrichtung, mittels welcher in einer ersten Schaltstellung ein Durchströmen des Brennstoffzellenstapels in eine erste Richtung und in einer zweiten Schaltstellung ein Durchströmen des Brennstoffzellenstapels in eine zweite, der ersten Richtung zumindest im Wesentlichen entgegengesetzten Richtung bewirkbar ist. Durch das Vorsehen einer solchen Ventileinrichtung kann auf eine aufwändige, prinzipiell jedoch ebenfalls vorstellbare, Pumpeinrichtung verzichtet werden, welche das Kühlmittel sowohl in die erste Richtung als auch in die zweite Richtung fördern kann.

Das Verändern der Zeitspanne und/oder der Wegstrecke kann insbesondere in Abhängigkeit von der Temperatur des Kühlmittels eingestellt werden, welches mittels geeigneter Temperatursensoren insbesondere an einem Kühlmitteleinlass und/oder an einem Kühlmittelauslass des Brennstoffzellenstapels erfasst werden kann.

Bei Brennstoffzellenstapeln, bei denen die Messung der Kühlmitteltemperatur nicht im elektrochemisch aktiven Bereich der Einzelzellen des Stapels stattfindet, kann es zu einer Zeitverzögerung kommen, bis die vom Brennstoffzellenstapel erzeugte Wärme bei den Temperatursensoren ankommt. In diesem Fall besteht eine alternative Möglichkeit das Verändern der Zeitspanne und/oder der Wegstrecke zu steuern darin, den Wirkungsgrad des Brennstoffzellenstapels über elektrische Leitung (d.h. Spannung und/oder Strom) des Brennstoffzellenstapels zu bestimmen. Diese Möglichkeit ist besonders vorteilhaft, da die elektrische Leitung des Brennstoffzellenstapels ohnehin gemessen werden muss. Das bedeutet: Bei geringen Temperaturen ist die Spannung geringer (schlechterer Wirkungsgrad) als bei höheren. Je größer die Bereiche werden in denen die Temperatur höher ist desto besser wird der Wirkungsgrad des Brennstoffzellenstapels, womit das Kühlmittel weiter bzw. länger transportiert werden muss, um die Wärme aus den warmen Bereichen zu wegzubefördern.

Die Vorteile und bevorzugten Ausführungsformen eines jeweiligen Aspekts der Erfindung gelten auch als Vorteile der bevorzugten Ausführungsformen eines jeweiligen weiteren Aspekts der Erfindung und umgekehrt. Zudem gelten die für das erfindungsgemäße Verfahren beschriebenen Vorteile und bevorzugten Ausführungsformen auch für das erfindungsgemäße Brennstoffzellensystem.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisch einen Brennstoffzellenstapel eines Brennstoffzellensystems für ein Fahrzeug, in welchem durch Umkehr der Strömungsrichtung eines Kühlmittels im Bereich von Hotspots gebildete Wärme verteilt wird;
- Fig. 2: den Brennstoffzellenstapel gemäß Figur 1, bei welchem durch Verteilen der Wärme das Kühlmittel im gesamten Brennstoffzellenstapel eine erhöhte Temperatur aufweist; und
- Fig. 3: schematisch die Einbindung des Brennstoffzellenstapels in einen Kühlmittelkreis.

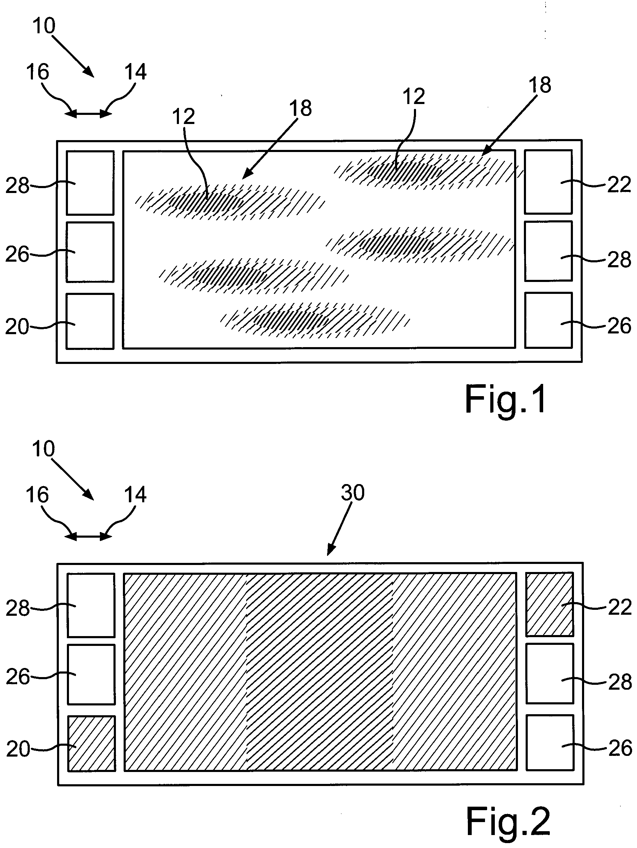

Figur 1 zeigt schematisch einen Brennstoffzellenstapel 10 eines Brennstoffzellensystems für ein Fahrzeug, welcher bei sehr niedriger Umgebungstemperatur, also bei einer Umgebungstemperatur von weniger als 0 °C in Betrieb genommen wurde. Ein solches In-Betrieb-Nehmen des Brennstoffzellenstapels 10 wird auch als Kaltstart oder Gefrierstart bezeichnet. Hierbei bilden sich im Bereich einzelner Brennstoffzellen des Brennstoffzellenstapels 10 zunächst sogenannte Hotspots 12, an welchen die Brennstoffzellenreaktion besser startet als in benachbarten Bereichen und welche sich daher stärker als die Umgebung erwärmen. Hierbei sorgt im Kühlbetrieb im Brennstoffzellenstapel 10 hin und her strömendes Kühlmittel dafür, dass trotz der Ausbildung der Hotspots 12 keine unerwünscht starke Erwärmung der Membran einer jeweiligen Brennstoffzelle erfolgt, welche insbesondere als Polymer-Elektrolyt-Membran (PEM) ausgebildet sein kann.

Vorliegend strömt im Kühlbetrieb das Kühlmittel also durch den Brennstoffzellenstapel 10 nicht lediglich in eine Richtung, sondern das Kühlmittel wird zunächst in eine erste Richtung 14 und dann in eine zweite Richtung 16 gefördert, wobei die Richtungen 14, 16 in Fig. 1 durch einen Doppelpfeil veranschaulicht sind. Das Umkehren der Strömungsrichtung des Kühlmittels erfolgt ausreichend rasch, sodass die von dem jeweiligen Hotspot 12 abgeführte Wärme den Brennstoffzellenstapel 10 nicht verlässt. So kann die Wärme besonders gut im Bereich der jeweiligen Hotspots 12 verteilt werden.

Durch das Hin- und Herströmen oder Oszillieren des Kühlmittels wird also eine Abflachung des in dem jeweiligen Hotspots 12 vorliegenden Temperaturprofils erreicht, sodass ein besonders großer Bereich 18 des Brennstoffzellenstapels 10 um den jeweiligen Hotspot 12 herum erwärmt wird. Dennoch wird durch das Kühlmittel verhindert, dass in diesem Bereich 18 eine Maximaltemperatur überschritten wird, welche eine Beschädigung der Membran zur Folge haben könnte.

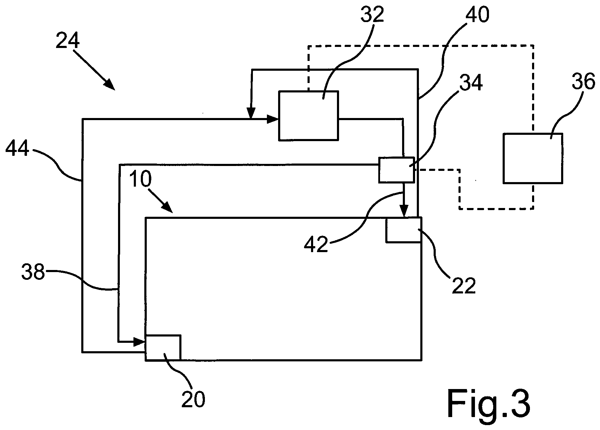

Der Brennstoffzellenstapel 10 weist einen ersten Kühlmittelanschluss oder Kühlmitteleinlass 20 auf und einen zweiten Kühlmittelanschluss oder Kühlmittelauslass 22. Im Normalbetrieb eines den Brennstoffzellenstapel 10 umfassenden Kühlmittelkreises 24 (vgl. Fig. 3) strömt das Kühlmittel vom Kühlmitteleinlass 20 zum Kühlmittelauslass 22, da keine Umkehrung der Strömungsrichtung stattfindet. Während des Gefrierstarts oder Kaltstarts des Brennstoffzellenstapels 10 dringt jedoch - je nach gerader eingestellter Richtung 14, 16 - entweder über den Kühlmitteleinlass 20 oder über den Kühlmittelauslass 22 Kühlmittel in den Brennstoffzellenstapel 10 ein. Weitere Anschlüsse 26, 28 des Brennstoffzellenstapels 10 dienen dem Zuführen bzw. Abführen der an der Brennstoffzellenreaktion beteiligten Betriebsstoffe, etwa des (üblicherweise rezirkulierten) Wasserstoffs und von Luft oder Sauerstoff. Da auch diese Betriebsstoffe den Brennstoffzellenstapel 10 durchströmen, hierbei jedoch die Strömungsrichtung nicht umgekehrt wird, sind die um die Hotspots 12 herum ausgebildeten Bereiche 18, in welchen über die Temperatur der Umgebung dieser Bereiche 18 hinaus erwärmtes Kühlmittel vorliegt etwas stärker hin zum Kühlmittelauslass 22 ausgedehnt.

Durch das wiederholte Umkehren der Strömungsrichtung des Kühlmittels bleiben die Hotspots 12 zwar erhalten, aber die von den Hotspots 12 erwärmten Bereiche 18 wachsen zunehmend. Zudem wird durch das wiederholte Umkehren der Strömungsrichtung die Bildung von Eis infolge eines Einfrierens von am jeweiligen Hotspot 12 gebildetem Reaktionswasser verhindert.

Vorliegend erfolgt die Umkehr der Strömungsrichtung des Kühlmittels zunächst vergleichsweise rasch, also nach dem Verstreichen einer vergleichsweise kurzen Zeitspanne. Mit anderen Worten ist die Amplitude der Kühlmittelschwingung zunächst besonders klein, und ein Kühlmittelvolumen, welches Wärme von einem Hotspot 12 als Wärmequelle abführt, legt in die jeweilige Richtung 14, 16 nur eine vergleichweise kurze Wegstrecke zurück. Insbesondere diese Maßnahme ermöglicht zwar das Wachsen des Hotspots 12, verhindert jedoch zugleich die Eisbildung, da sich das erwärme Kühlmittel nicht zu weit von dem jeweiligen Hotspot 12 entfernt.

Mit zunehmender Vergrößerung der Bereiche 18 wird jedoch die Amplitude der Kühlmittelschwingung vergrößert, das am jeweiligen Hotspot 12 erwärmte Kühlmittelvolumen legt also eine größere Wegstrecke zurück. Dies kann bei einer Kühlmittelpumpe mit konstanter Pumpleistung dadurch erreicht werden, dass die Zeitspanne, nach deren Verstreichen die Strömungsrichtung umgekehrt wird, vergrößert wird. Alternativ kann während gleich bleibender Zeitspannen das Kühlmittel mit einer zunehmend größeren Geschwindigkeit gefördert werden, sodass es in derselben Zeitspanne eine größere Wegstrecke zurücklegt.

Bei diesem zunehmenden Vergrößern der Amplitude der Kühlmitteloszillation wird zunächst darauf geachtet, dass das erwärmte Kühlmittel im Bereich zwischen dem Kühlmitteleinlass 20 und dem Kühlmittelauslass 22 verbleibt, sodass keine Wärme aus dem Brennstoffzellenstapel 10 abgeführt wird, wohl jedoch von den Hotspots 12.

Mit zunehmender Wegstrecke, über welche hinweg sich das erwärmte Kühlmittel in die jeweilige Richtung 14, 16 bewegt, gelangt das erwärmte Kühlmittel jedoch zum Kühlmittelauslass 22 und zum Kühlmitteleinlass 20. In diesen Bereichen vermischt sich aus separaten Kühlmittelkanälen des Brennstoffzellenstapels 10 stammendes und üblicherweise unterschiedlich warmes Kühlmittel. Es findet also eine Angleichung der Temperaturen des Kühlmittels statt, welches in den jeweiligen Kühlmittelkanälen vorliegt.

Während also zunächst durch das Alternieren der Strömungsrichtung eine Wärmeverteilung in die erste Richtung 14 und die zweite Richtung 16 stattfindet, führt das Vermischen des Kühlmittels im Bereich des Kühlmitteleinlasses 20 und des Kühlmittelauslasses 22 auch zu einer besonders guten Verteilung der Wärme in eine Richtung senkrecht zu diesen Richtungen 14, 16. Es erwärmt sich so das gesamte Volumen des sich in dem Brennstoffzellenstapel 10 befindenden Kühlmittels besonders rasch.

Diese Situation ist in Fig. 2 veranschaulicht, bei welcher das erwärmte Kühlmittel in den Bereich des Kühlmitteleinlasses 20 und des Kühlmittelauslasses 22 vorgedrungen ist. Hierbei liegt aufgrund der immer noch anhaltenden alternierenden Kühlmittelströmung, welche zum Einbringen von kälterem Kühlmittel von außerhalb des Brennstoffzellenstapels 10 in den Brennstoffzellenstapel 10 führt, in dessen Zentralbereich 30 ein relatives Maximum der Temperatur vor. Wenn dieser Zustand des Aufwärmens des gesamten sich in dem Kühlmittelkreis 24 (vgl. Fig. 3) (wobei speziell für den Kaltstart oder Gefrierstart auch ein kleinerer Kühlmittelkreis mit weniger Kühlmittelvolumen vorgesehen sein kann (nicht dargestellt)) befindenden Kühlmittelvolumens erreicht ist, kann auf dem normalen Kühlbetrieb umgeschaltet werden, in welchem das Kühlmittel über den Kühlmitteleinlass 20 in den Brennstoffzellenstapel 10 einströmt und diesen über den Kühlmittelauslass 22 wieder verlässt, ohne dass alternierend (oder anschließend) die Strömungsrichtung des Kühlmittels (wieder) umgekehrt wird.

Wie aus Fig. 3 ersichtlich, ist der Brennstoffzellenstapel 10 in den Kühlmittelkreis 24 eingebunden, in welchem eine Kühlmittelpumpe 32 das Kühlmittel fördert. Es kann auf den Normalbetrieb umgeschaltet werden, wenn aufgrund der besonders großen Amplitude der in die jeweilige Richtung 14, 16 alternierenden Kühlmittelströmung das gesamte sich in dem Kühlmittelkreis 24 befindende Kühlmittel gleichmäßig aufgewärmt ist. Dann kann der Kühlmittelkreis 24 mit einem weiteren (nicht gezeigten) Kühlmittelkreis fluidisch gekoppelt werden, in welchem ein Kühler angeordnet ist. Dies kann durch Öffnen von den weiteren Kühlmittelkreis während des Kaltstarts oder Gefrierstarts von dem Kühlmittelkreis 24 absperrenden Ventilen erfolgen.

Es kann jedoch auch nach dem Erwärmen lediglich des sich in dem Bereich des Brennstoffzellenstapels 10 befindenden Kühlmittelvolumens etwas länger das Kühlmittel nur in eine der beiden Richtungen 14, 16 gefördert werden, sodass ein Teil des sich in dem Brennstoffzellenstapel 10 befindenden, erwärmten Kühlmittels durch aus dem restlichen Bereich des Kühlmittelkreises 24 stammendes, kälteres Kühlmittel ersetzt wird. Anstelle eines partiellen Ersatzes des Kühlmittels kann auch ein kompletter Ersatz durch kaltes Kühlmittel stattfinden. Dann wird also eine komplette Charge des erwärmten Kühlmittels aus dem Brennstoffzellenstapel 10 abgezogen und durch kaltes, noch nicht erwärmtes Kühlmittel aus dem Kühlmittelkreis 24 ersetzt. Nachdem ein solcher partieller oder vollständiger Ersatz des sich in dem Brennstoffzellenstapel 10 befindenden Kühlmittels oft genug wiederholt wurde, ist schließlich das gesamte sich in dem Kühlmittelkreis 24 befindende Kühlmittel mehr oder weniger gleichmäßig aufgewärmt. Dann kann auf den Normalbetrieb umgeschaltet werden, in welchem die Strömungsrichtung des Kühlmittels nicht mehr umgekehrt wird.

Alternativ oder zusätzlich können am Kühlmitteleinlass 24 und/oder am Kühlmittelauslass 22 Klappen oder dergleichen der Strömung des Kühlmittels einen Widerstand entgegensetzende Strömungsleitelemente vorgesehen werden, welche ein Einströmen von Kühlmittel in den Brennstoffzellenstapel 10 oder ein Ausströmen von Kühlmittel aus dem Brennstoffzellenstapel 10 erschweren. Eine derartige Klappe oder dergleichen Strömungsleitelement kann beispielsweise als Bimetallelement ausgebildet sein, welches temperaturabhängig seine Stellung ändert. Ist eine gewünschte Temperatur erreicht, so wird die Klappe, insbesondere selbsttätig, in eine Stellung verbracht, in welcher sie das Einströmen des Kühlmittels in den Brennstoffzellenstapel 10 bzw. das Ausströmen des Kühlmittels aus dem Brennstoffzellenstapel 10 nicht mehr behindert. Während sich die Klappe jedoch in ihrer Funktionsstellung befindet sorgt sie dafür, dass das Kühlmittel zumindest weitgehend im Brennstoffzellenstapel 10 verbleibt. Sobald die Klappe dann weggeklappt ist, kann auf den Normalbetrieb umgestellt werden.

Aus Fig. 3 ist die Einbindung des Brennstoffzellenstapels 10 in den Kühlmittelkreis 24 ersichtlich. Von der Kühlmittelpumpe 32 kommend strömt das Kühlmittel zu einem Ventil 34, welches von einem Steuergerät 36 angesteuert wird. In einer ersten Schaltstellung des Ventils 34 strömt das Kühlmittel über eine Leitung 38 zum Kühlmitteleinlass 20 des Brennstoffzellenstapels 10. Entsprechend verlässt aus dem Brennstoffzellenstapel 10 heraus gedrängtes Kühlmittel diesen über den Kühlmittelauslass 22. Von dort gelangt es über eine Leitung 40 auf die Niederdruckseite der Kühlmittelpumpe 32.

In einer zweiten Schaltstellung des Ventils 34 strömt das Kühlmittel vom Ventil 34 über eine dritte Leitung 42 zum Kühlmittelauslass 22 des Brennstoffzellenstapels 10, und es verlässt diesen über eine an den Kühlmitteleinlass 20 angeschlossene vierte Leitung 44, welche ebenfalls zur Niederdruckseite der Kühlmittelpumpe 32 führt. Durch Verändern der Schaltstellungen des Ventils 34 lässt sich also auch mit einer Kühlmittelpumpe 32, welche lediglich das Kühlmittel in eine Richtung fördert, ein Durchströmen des Brennstoffzellenstapels 10 in die erste Richtung 14 oder in die zweite Richtung 16 (vgl. Fig. 1) bewerkstelligen.

Wie in Fig. 3 angedeutet, kann mittels des Steuergeräts 36 auch die Kühlmittelpumpe 32 angesteuert werden. Hierbei kann die Kühlmittelpumpe 32 das Kühlmittel mit unterschiedlich hohem Druck beaufschlagen oder unterschiedliche Förderleistungen einstellen. Auf diese Weise lässt sich das Kühlmittel mit unterschiedlich hohen Geschwindigkeiten fördern, sodass sich auch bei konstanter Taktzeit des Umschaltens des Ventils 34 in die unterschiedlichen Schaltstellungen unterschiedlich große Amplituden der Kühlmittelströmung einstellen lassen. Bei einer Kühlmittelpumpe 32, welche in beide Richtungen 14, 16 fördern kann, kann auf das Ventil 34 verzichtet werden, und die Umkehr der Strömungsrichtung lässt sich durch Ansteuern der Kühlmittelpumpe 32 mittels des Steuergeräts 36 erreichen.

Der in Fig. 3 schematisch gezeigte Kühlmittelkreis 24 ist in einen weiteren, (nicht gezeigten) Kühlmittelkreis eingebunden, welcher einen Kühler aufweist. Zunächst verbleibt im Kühlbetrieb, in welchem von den Hotspots 12 Wärme abgeführt und im Brennstoffzellenstapel 10 verteilt wird, das Kühlmittel bevorzugt in dem Kühlmittelkreis 24. Anschließend kann der Kühlmittelkreis 24 mit dem zweiten, den Kühler aufweisenden Kühlmittelkreis gekoppelt werden, um dann vom Brennstoffzellenstapel 10 im Betrieb freigesetzte überschüssige Wärme über den Kühler abführen zu können.

Im Betriebsmodus des Brennstoffzellenstapels 10, in welchem dieser in den größeren, den Kühler aufweisenden Kühlmittelkreis eingebunden ist, braucht die Schaltstellung des Ventils 34 nicht mehr verändert zu werden, sondern das Kühlmittel strömt über den Kühlmitteleinlass 20 in den Brennstoffzellenstapel 10 ein, und es verlässt diesen über den Kühlmittelauslass 22.

### Bezugszeichenliste

- 10: Brennstoffzellenstapel
- 12: Hotspot
- 14: Richtung
- 16: Richtung
- 18: Bereich
- 20: Kühlmitteleinlass
- 22: Kühlmitteleinlass
- 24: Kühlmittelkreis
- 26: Anschluss
- 28: Anschluss
- 30: Zentralbereich
- 32: Kühlmittelpumpe
- 34: Ventil
- 36: Steuergerät
- 38: Leitung
- 40: Leitung
- 42: Leitung
- 44: Leitung

## Patentansprüche

1. Verfahren zum Betreiben eines Brennstoffzellenstapels (10) für ein Brennstoffzellensystem, insbesondere eines Fahrzeugs, bei welchem in einem Kühlbetrieb durch Umkehren der Strömungsrichtung (14, 16) eines Kühlmittels das Kühlmittel im Brennstoffzellenstapel (10) zunächst in eine erste Richtung (14) gefördert wird und anschließend in eine zweite, der ersten Richtung (14) zumindest im Wesentlichen entgegengesetzte Richtung (16),
wobei während des Kühlbetriebs
- eine Zeitspanne, nach deren Verstreichen die Strömungsrichtung (14, 16) umgekehrt wird, und
- eine Wegstrecke, über welche hinweg ein Kühlmittelvolumen von einer sich in dem Brennstoffzellenstapel befindenden Wärmequelle (12) entfernt wird,
durch Verändern des Drucks und/oder der Förderleistung einer Pumpeinrichtung verändert werden,
**dadurch gekennzeichnet, dass**
die Zeitspanne und die Wegstrecke mit zunehmender Dauer des Kühlbetriebs vergrößert werden.

2. Verfahren nach Anspruch 1,
**dadurch gekennzeichnet, dass**
zumindest während einer ersten Zeitspanne ein Kühlmittelvolumen, welches eine höhere Temperatur aufweist als ein weiteres Kühlmittelvolumen in einem den Brennstoffzellenstapel (10) umfassenden Kühlmittelkreis (24), nicht weiter als eine vorbestimmte Wegstrecke von einer sich in dem Brennstoffzellenstapel (10) befindenden Wärmequelle (12) entfernt wird.

3. Verfahren nach einem der Ansprüche 1 oder 2,
**dadurch gekennzeichnet, dass**
während einer ersten Phase des Kühlbetriebs ein Kühlmittelvolumen, welches eine höhere Temperatur aufweist als ein weiteres Kühlmittelvolumen in einem den Brennstoffzellenstapel (10) umfassenden Kühlmittelkreis (24), zwischen einem ersten Kühlmittenanschluss (20) des Brennstoffzellenstapels (10) und einem zweiten Kühlmittenanschluss (22) des Brennstoffzellenstapels (10) hin und her bewegt wird.

4. Verfahren nach Anspruch 3,
**dadurch gekennzeichnet, dass**
während einer zweiten Phase des Kühlbetriebs das Kühlmittelvolumen zumindest bis zu dem ersten Kühlmittenanschluss (20) und/oder bis zu dem zweiten Kühlmittenanschluss (22) des Brennstoffzellenstapels (10) gefördert wird.

5. Verfahren nach einem der Ansprüche 1 bis 4,
**dadurch gekennzeichnet, dass**
während des Kühlbetriebs das Kühlmittel zumindest zeitweise ausschließlich durch einen ersten, den Brennstoffzellenstapel (10) umfassenden Kühlmittelkreis (24) gefördert wird, welcher mit einem zweiten, einen Kühler aufweisenden Kühlmittelkreis fluidisch koppelbar ist.

6. Verfahren nach einem der Ansprüche 1 bis 5,
**dadurch gekennzeichnet, dass**
in Abhängigkeit von einer Temperatur eines sich in dem Brennstoffzellenstapel befindenden Kühlmittelvolumens zumindest ein Teil dieses Kühlmittelvolumens durch Kühlmittel aus einem den Brennstoffzellenstapel (10) umfassenden Kühlmittelkreis (24) ersetzt wird, welches eine geringere Temperatur aufweist.

7. Verfahren nach einem der Ansprüche 1 bis 5,
**dadurch gekennzeichnet, dass**
in Abhängigkeit des mit Hilfe der elektrischen Leitung des Brennstoffzellenstapels bestimmten Wirkungsgrades des Brennstoffzellenstapels zumindest ein Teil dieses Kühlmittelvolumens durch Kühlmittel aus einem den Brennstoffzellenstapel (10) umfassenden Kühlmittelkreis (24) ersetzt wird, welches eine geringere Temperatur aufweist

8. Verfahren nach einem der Ansprüche 1 bis 7,
**dadurch gekennzeichnet, dass**
ein Ausströmen von Kühlmittel aus dem Brennstoffzellenstapel (10) und/oder ein Einströmen von Kühlmittel in den Brennstoffzellenstapel (10) in Abhängigkeit von einer Temperatur des sich in dem Brennstoffzellenstapel (10) befindenden Kühlmittels zumindest zeitweise mittels wenigstens eines Strömungsleitelements erschwert wird.

## Claims

1. Method for operating a fuel cell stack (10) for a fuel cell system, in particular of a vehicle, wherein, in a cooling mode, a coolant is, by reversing the direction of flow (14, 16) of the coolant, first conveyed in a first direction (14) in the fuel cell stack (10) and then in a second direction (16), which is at least substantially opposed to the first direction (14),
wherein during the cooling mode
- a period of time after which the direction of flow (14, 16) is reversed, and
- a distance across which a coolant volume is removed from a heat source (12) located in the fuel cell stack
are changed by altering the pressure and/or the output of a pumping device,
**characterised in that**
the period of time and the distance are increased as the duration of the cooling mode increases.

2. Method according to claim 1,
**characterised in that**
at least during a first period of time, a coolant volume having a higher temperature than a further coolant volume in a coolant circuit (24) including the fuel cell stack (10) is removed from a heat source (12) located in the fuel cell stack (10) no farther than by a predetermined distance.

3. Method according to claim 1 or 2,
**characterised in that**
during a first phase of the cooling mode, a coolant volume having a higher temperature than a further coolant volume in a coolant circuit (24) including the fuel cell stack (10) is moved to and fro between a first coolant port (20) of the fuel cell stack (10) and a second coolant port (22) of the fuel cell stack (10).

4. Method according to claim 3
**characterised in that**
during a second phase of the cooling mode, the coolant volume is conveyed at least to the first coolant port (20) and/or to the second coolant port (22) of the fuel cell stack (10).

5. Method according to any of claims 1 to 4,
**characterised in that**
during the cooling mode the coolant volume is at least temporarily conveyed only through a first coolant circuit (24), which includes the fuel cell stack (10) and can be fluidically coupled to a second coolant circuit comprising a cooler.

6. Method according to any of claims 1 to 5,
**characterised in that**
depending on a temperature of a coolant volume in the fuel cell stack, at least a part of this coolant volume is replaced by coolant from a coolant circuit (24) including the fuel cell stack (10), which coolant has a lower temperature.

7. Method according to any of claims 1 to 5,
**characterised in that**
depending on the efficiency of the fuel cell stack as determined with the aid of the electric line of the fuel cell stack, at least a part of this coolant volume is replaced by coolant from a coolant circuit (24) including the fuel cell stack (10), which coolant has a lower temperature.

8. Method according to any of claims 1 to 7,
**characterised in that**
an outflow of coolant from the fuel cell stack (10) and/or an inflow of coolant into the fuel cell stack (10) is/are at least temporarily impeded by means of at least one flow ducting element depending on a temperature of the coolant in the fuel cell stack (10).

## Revendications

1. Procédé de fonctionnement d'un assemblage de piles à combustible (10) pour un système de piles à combustible, en particulier destiné à un véhicule automobile, selon lequel dans un mode de refroidissement par inversion de la direction d'écoulement (14, 16) d'un réfrigérant, le réfrigérant dans l'assemblage de piles à combustible (10) est en premier lieu acheminé dans une première direction (14) et ensuite dans une seconde direction (16) qui est au moins essentiellement opposée à la première direction (14),
en mode de refroidissement
- un intervalle de temps, qui, une fois expiré, la direction d'écoulement (14, 16) étant inversée, et
- une distance, sur laquelle un volume de réfrigérant est supprimé d'une source de chaleur (12) se trouvant dans l'assemblage de piles à combustible,
étant modifiés par le changement de la pression et/ou du débit d'un dispositif de pompe, **caractérisé en ce que** l'intervalle de temps et la distance sont augmentés en fonction à mesure que la durée du mode de refroidissement augmente.

2. Procédé selon la revendication 1, **caractérisé en ce qu'**au moins pendant un premier intervalle de temps un volume de réfrigérant, qui présente une température supérieure à celle d'un autre volume de réfrigérant dans un circuit de réfrigérant (24) entourant l'assemblage de piles à combustible (10), est supprimé pas au-delà d'une distance prédéfinie d'une source de chaleur (12) se trouvant dans l'assemblage de piles à combustible (10).

3. Procédé selon l'une quelconque des revendications 1 ou 2, **caractérisé en ce que** pendant une première phase du mode de refroidissement un volume de réfrigérant, qui présente une température supérieure à celle d'un autre volume de réfrigérant dans un circuit de réfrigérant (24) entourant l'assemblage de piles à combustible (10), effectue un mouvement de va-et-vient entre un premier raccord (20) médian de refroidissement de l'assemblage de piles à combustible (10) et un second raccord médian (22) de refroidissement de l'assemblage de piles à combustible (10).

4. Procédé selon la revendication 3, **caractérisé en ce que** pendant une seconde phase du mode de refroidissement le volume de réfrigérant est acheminé au moins jusqu'au premier raccord médian (20) de refroidissement et/ou jusqu'au second raccord médian (22) de refroidissement de l'assemblage de piles à combustible (10).

5. Procédé selon l'une quelconque des revendications 1 à 4, **caractérisé en ce qu'**en mode de refroidissement le réfrigérant est acheminé au moins partiellement exclusivement par un premier circuit (24) de réfrigérant entourant l'assemblage de piles à combustible (10) qui peut être accouplé en liaison fluidique avec un second circuit de refroidissement présentant un refroidisseur.

6. Procédé selon l'une quelconque des revendications 1 à 5, **caractérisé en ce qu'**en fonction d'une température d'un volume de réfrigérant se trouvant dans l'assemblage de piles à combustible au moins une partie dudit volume de réfrigérant est remplacé par le réfrigérant provenant d'un circuit (24) de réfrigérant entourant l'assemblage de piles à combustible (10) qui présente une température inférieure.

7. Procédé selon l'une quelconque des revendications 1 à 5, **caractérisé en ce qu'**en fonction de l'efficacité de l'assemblage de piles à combustible déterminé à l'aide du câble électrique de l'assemblage de piles à combustible au moins une partie dudit volume de réfrigérant est remplacé par le réfrigérant provenant d'un circuit (24) de réfrigérant entourant l'assemblage de piles à combustible (10) qui présente une température inférieure.

8. Procédé selon l'une quelconque des revendications 1 à 7, **caractérisé en ce qu'**un écoulement vers la sortie du réfrigérant provenant de l'assemblage de piles à combustible (10) et/ou un écoulement vers l'entrée du réfrigérant dans l'assemblage de piles à combustible (10) est rendu plus difficile au moins à certains moments au moyen d'un élément déflecteur d'écoulement en fonction d'une température du réfrigérant se trouvant dans l'assemblage de piles à combustible (10).
